# EUROPEAN PATENT APPLICATION

(11) **EP 2 961 134 A1**
(43) Date of publication of application: **30.12.2015**
(21) Application number: 14306010.1
(22) Date of filing: 26.06.2014
(51) Int. Cl.: H04L 29/08

(54) **Publish/Subscribe network comprising devices including a resource sharing application for sharing of resources**

(71) Applicant: Thomson Licensing, 92130 Issy-les-Moulineaux (FR)
(72) Inventor: Praet, Paul, 2060 Antwerpen (BE); Martens, Kristof, 3020 Herent (BE)
(74) Representative: Arnold, Klaus-Peter

(57) **Abstract**

The Publish/subscribe network (N) comprises at least two devices (I1, I2) including each a resource sharing application (A1, A2) with a user interface (UI1, UI2) comprising a share function (S1) for publishing a resource via a publish/subscribe message to the publish/subscribe network, and a resource list function (R1, R2) for listing the resource, wherein a resource sharing application (A1, A2) of one device (I1, I2) subscribes to a resource sharing application (A1, A2) of another device (I1, I2).

## Description

### TECHNICAL FIELD

The invention relates to the field of publish/subscribe networks, for example to a home network using Publish/Subscribe and including an access gateway, adapted to operate via a broadband connection with a service provider network.

### BACKGROUND OF THE INVENTION

Access gateways are widely used to connect devices in the home to the Internet or to any other wide area network (WAN). Access gateways use in particular digital subscriber line (DSL) technology that enables a high data rate transmission over copper lines or optical transmission lines for Internet services. Residential gateways including wireless technology have a key role in today's home and professional environments. A mechanism for connecting wireless devices to a local area network (LAN) is called Wi-Fi, which is a brand name of the Wi-Fi Alliance for devices using the IEEE 802.11 family of standards for wireless data transmission.

Home networks have become part of everyday life for many customers. A home network consists of a range of heterogeneous devices, which means that the home network is made up of different kinds of devices. All these devices need to communicate with each other. For this interconnection, multiple solutions are available: The home network uses a mixture of solutions, such as wireless and wired network connections. Combining these devices creates a network that allows users to share information and control devices in the home. Examples of network devices in the home are for example residential gateways, set-top boxes, TVs, personal computers, tablet PCs, smart phones, network-attached storage (NAS) devices, printers and game consoles.

In software architecture, Publish/Subscribe is a messaging pattern where senders of messages, called publishers, do not program the messages to be sent directly to specific receivers, called subscribers. Instead, published data is multicasted, without knowledge of what, if any, subscribers there may be. Similarly, subscribers subscribe to particular data, and only receive messages that are of interest, without knowledge of what, if any, publishers there are. Devices connected within a Publish/Subscribe-based network communicate on 'Topics' and value changes of its parameters that are published, to the ones subscribed.

DDS (Data Distribution Service for Real-Time Systems) is a standard governed by the Object Management Group (OMG). It describes a data-centric publish-subscribe middleware that can be used to build distributed real-time systems. Since its formal adoption as an OMG standard in the year 2004, it has become a popular technology used in many different industries such as the airline/aviation industry, the automotive industry, the military, etc. Several commercial and open-source implementations of the DDS standard exist.

File sharing systems for sharing resources among devices within a network or between networks are for example: Email, which has a limited attachment size and requires an Internet-access; USB thumbdrive, which requires USB access for connecting with a device; File Transfer Protocol (FTP) and SAMBA, which are complicated to setup and not available for some operating systems of network devices; and Windows based file sharing, which is quite complex to configure. There is no universal method to share files in a zero-configuration fashion. When a user wants to share a resource to other users within his network, he wants to be able to do this as fast as possible with as less technical limitations as possible. On the other hand, the user wants to be able to access shared resources in as few steps as possible. Many solutions already exist but each come with their benefits and drawbacks.

### SUMMARY OF THE INVENTION

The publish/subscribe network comprises at least two devices including each a resource sharing application with a user interface, which comprises a share function for publishing a resource via a publish/subscribe message to the publish/subscribe network, and which comprises a resource list function for listing the resource, wherein a resource sharing application of one device subscribes to a resource sharing application of another device.

In an aspect of the invention, each resource sharing application includes a resource provider object, and each device publishes its resource provider object to all devices of the publish/subscribe network, when the device is powered up, or upon a user action. The resource provider object includes identification data of a device, and the resource provider object of one device subscribes to a resource provider object of another device. The resource is identified by a resource object including identification data of the resource object. Each device of the publish/subscribe network keeps a list including all the shared resource objects of devices having their resource provider object published.

In a preferred embodiment, the identification data of the resource provider object include an identification number of the device, a user name of the device and an Internet address of the device, and the identification data of the resource object include an identification number of the resource object, a user name of the resource object and the resource provider object of the device, which offers the resource. Each device of the publish/subscribe network keeps a list including all the shared resource objects of devices having their resource provider object published. The resource list function of a first device lists in particular resource objects of other devices being allowed for sharing within the publish/subscribe network on the user interface of the first device.

In a further aspect of the invention, the publish/subscribe network is a secured home network and the devices are Internet-enabled devices comprising an Internet address, and the resource sharing applications utilize a Data Distribution Service for Real-Time Systems (DDS) for sending and receiving of publish/subscribe messages within the publish/subscribe network.

The invention concerns further a computer readable storage medium including instructions for running a resource sharing application within a device of the publish/subscribe network, and a device including a microcontroller and a memory having stored instructions for running a resource sharing application.

### BRIEF DESCRIPTION OF THE DRAWINGS

Preferred embodiments of the invention are explained in more detail below by way of example with reference to schematic drawings, which show:
- Fig. 1: a publish/subscribe network including a multitude of devices,
- Fig. 2: resource sharing applications of two devices of the publish/subscribe network of figure 1, and
- Fig. 3: an example for a resource sharing for the embodiment of figure 2.

### DETAILED DESCRIPTION OF PREFERRED EMBODIMENTS

In the following description, a publish/subscribe network comprising at least two devices for sharing of resources is described. For purposes of explanation, numerous specific details are set forth in order to provide a thorough understanding of the embodiments. It will be evident, however, to one skilled in the art that the present invention may be practiced without these specific details.

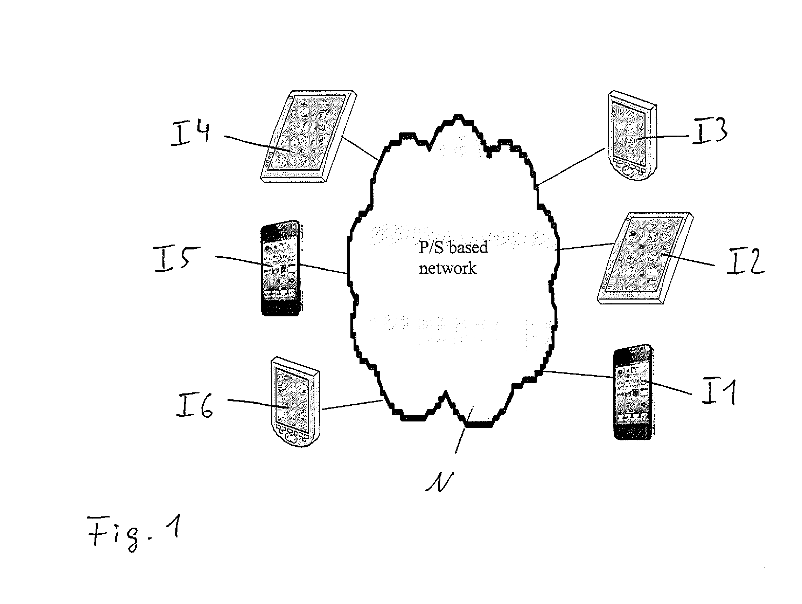

The publish/subscribe network is for example a home network N including a multitude of devices In, n=1-6, depicted in figure 1, and an access gateway, e.g. a residential gateway, (not shown). The devices In are Internet enabled devices comprising an IP address and a MAC address and are for example personal computers, laptops, tablet PCs and/or smartphones. The devices In comprise each a resource sharing application with a user interface including a share function and a resource list function for sharing resources between the devices In. Under resources it is understood in this context any multimedia files, e.g. audio, video or still picture files, or video or audio streams, e.g. from webcams or microphones.

The share function allows a user of the device I1 to publish a resource of his device via a publish/subscribe message to the publish/subscribe network N. Via the resource list function, a second user, e.g. of the device 12, can subscribe to this resource as published through the publish/subscribe network N, for using the resources of the device I1 as shared by the first user on his device I1. The resources shared by the first user on his device I1 are listed in a resource list on the device 12 by its resource list function, and can be selected by the second user e.g. by using a double click, to use the shared resources of the device I1 on his device 12, for example to see still pictures, a video, or hear music on his device 12.

When the first user shares a resource on his device I1, all other devices 12-16 having subscribed to this resource are notified immediately via a publish/subscribe message of the publish/subscribe network N. Via the resource list function, the other users can easily locate the resource on the device I1 and use it.

The resource sharing application with the user interface comprising the share function and the resource list function as included in each of the devices In is for example a part of a network operating application being included in each of the devices In for sending and receiving the publish/subscribe messages via the access gateway. The network operating application is configured in particular as an execution environment on top of an operating system of a respective device In and utilizes for example a data distribution service for real time systems (DDS), which uses topics for sharing information between devices. Because the network operating application fits on top of the operating system of the respective device, the resource sharing between the devices In is independent of the operating system of the devices In. The devices In use for example operating systems like WINDOWS, MAC OS, LINUX or ANDROID, which cannot communicate easily between each other.

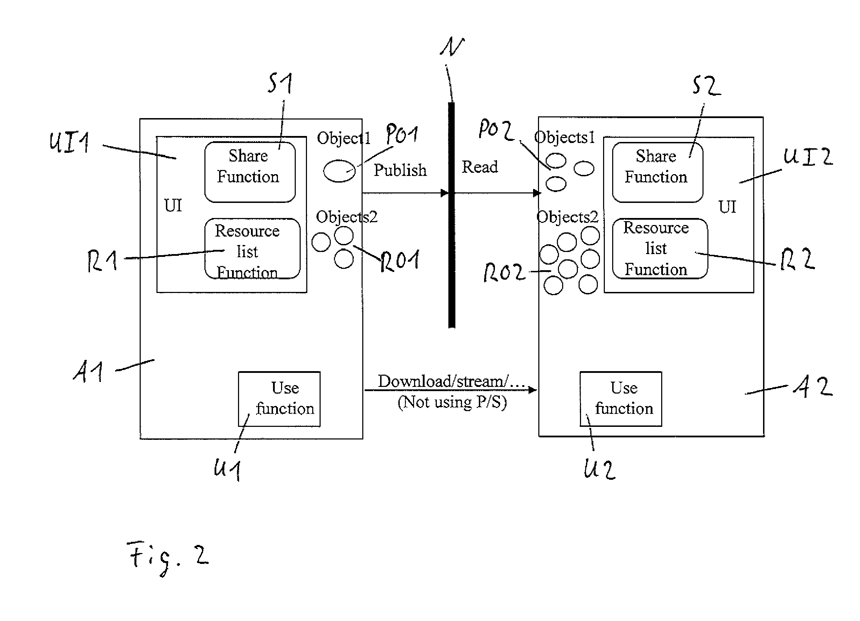

The resource sharing applications for the two devices I1, 12 are illustrated in more detail in Fig. 2. Device I1 includes a resource sharing application A1 comprising a use function U1, a share function S1 and a resource list function R1, the share function S1 and the resource list function R1 being imbedded in a user interface UI1 of the device I1. The resource sharing application A2 of the device 12 comprises a use function U2, a share function S2 and a resource list function R2, the share function S2 and the resource list function R2 being imbedded in a user interface UI2.

The resource sharing applications A1, A2 allow to perform the following actions:
a share action, that publishes the existence of a new shared resource to the publish/subscribe network N, by using the share function S1 or the share function S2;
a resource list action, offering a list of the shared resources for a user; and
a use action, allowing a user to do at the subscriber site something with a resource.

The resource sharing application A1 includes in this embodiment further a resource provider object PO1 for identifying the device I1 and resource objects RO1 for identifying the shared resources within the publish/subscribe network N. The resource sharing application A2 includes correspondingly a resource provider object PO2 for identifying the device 12 and resource objects RO2 for identifying shared resources within the publish/subscribe network N.

The device I1 has for example the resource provider object PO1: an internal identification number, e.g. 12345; a user name, e.g. "John's smartphone"; and an Internet address, e.g. a Hypertext Transfer Protocol (HTTP) address: http://192.168.1.101:8080.

A resource object is identified by an internal identification number, e.g. 67890; a resource name, e.g. "myfunnycat.mkv", "webcam1"; and the identification number of the resource provider providing the resource, e.g. 12345 for the device I1.

The resource provider object PO1 of device I1 includes for example three shared resources RO1 which the device I1 shares with the other devices 12-16 of the publish/subscribe network N.

The resource sharing application A2 includes three resource provider objects PO2, one identifying the device 12, one representing a subscription to the resource provider object PO1 of device I1, and one representing a subscription to a resource provider object of a further device of the publish/subscribe network N. The resource sharing application A2 includes further seven resource objects RO2.

The share function S1 selects resources for sharing being included in the device I1 for example by selecting a resource of the device I1. The resource list function RO2 of the device 12 shows all resource objects RO1 of the device I1 in a resource list, and the user of the device 12 can select a resource of the device I1 for example by double clicking on the respective resource. The resource is then displayed on a display of device 12, for example: a picture in case of a still picture file, or a video stream in case of a video file or a web cam stream. The download from the device I1 to the device 12 is independent of the publish/subscribe network N, and uses for example a command according to a Universal Plug and Play (UPnP) standard or a Digital Living Network Alliance (DLNA) standard.

The resource provider object of a respective device In is published as soon as the device In is powered up, or upon a manual user action, and identifies the device In to the other devices of the publish/subscribe network N. Each device In of the publish/subscribe network N publishes one resource provider object, and each device In of the publish/subscribe network N keeps a list including all the published resource provider objects of the publish/subscribe network N.

Each resource object of a device In is published to the network N after a user has selected the respective resource object for sharing by using the share function, which resource object is uniquely identified by the name of the resource and the location where it is stored. The resource object is mapped in a software implementation to the respective file stored somewhere in the local file system of the respective device In, so that whenever a user requests a particular resource object from the device In, the resource sharing application of the that device will know which resource object to return to the publish/subscribe network N.

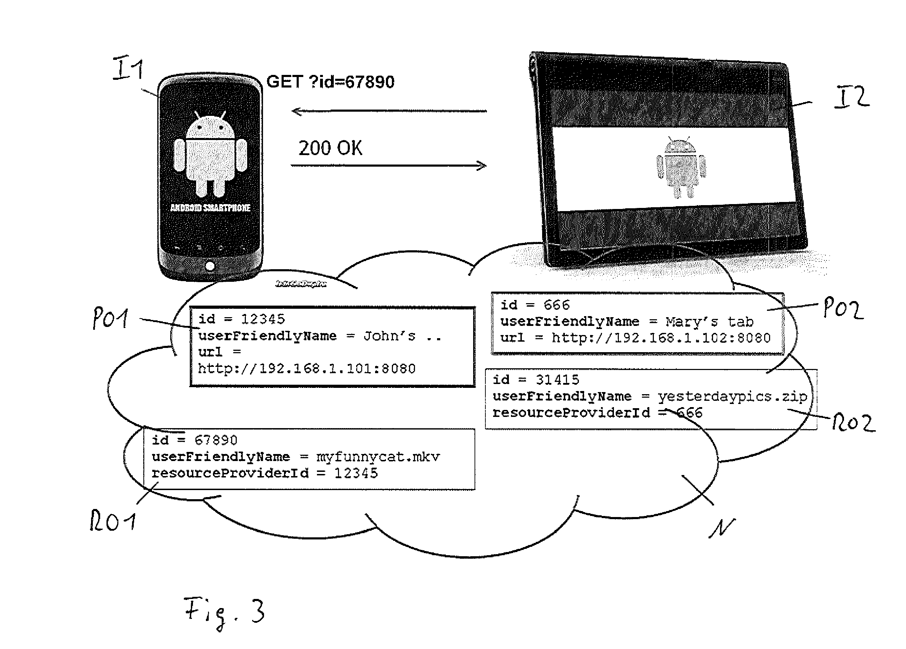

An embodiment illustrating a sharing of resource objects between two devices is illustrated in figure 3, which depicts the first device I1 comprising a resource provider object PO1 and a resource object RO1, and the second device 12 comprising a resource provider object PO2 and a resource object RO2, as indicated. Each of the devices I1, 12 has the respective resource sharing application A1, A2, as depicted in figure 2, running and each device I1, 12 has published their resource provider object PO1, respectively PO2, to the network N.

At a certain point in time, the user of the device I1 will share a video "myfunnycat.mkv" to the publish/subscribe network N by using the share function S1 of the device I1. The resource sharing application A1 of the device I1 then generates the resource object RO1 for the video "myfunnycat.mkv" and publishes the resource object RO1 to the publish/subscribe network N. The resource object RO1 is then listed in the resource list of the resource list function R2 of the resource sharing application A2, because the user of the device 12 has subscribed to the resource provider object PO1 of the device I1.

When the user of the device 12 then wants to play the video "myfunnycat.mkv", he selects this file in the resource list as provided by the resource list function R2, for example by double clicking. The resource sharing application A2 then constructs a Uniform Resource Identifier (URI) for the video file for retrieving the video file from the device I1, which will look in this embodiment like this: http://192.168.1.101:8080/?id=67890, and by using a HTTP "GET" command, the video "myfunnycat.mkv" is streamed from the device I1 to the device 12.

Instead of the HTTP protocol, also other protocols like FTP or HTTPS may be used. Also other resource objects can be retrieved simply by the users of the devices I1, 12, by selecting a wanted resource being shared to the publish/subscribe network N, which causes the respective resource sharing application to construct a URI for this resource and retrieves the object by using one of the protocols, as described before.

By using resource sharing applications within the publish/subscribe network as described, resource sharing between heterogenic network devices within a home network can be provided without being dependent on the respective operating system of the device. The publish/subscribe network can include any kind of smartphone, tablet PC, personal computer or laptop. Not only sharing of files, but also of video streams as provided for example by webcams or video providers is possible.

Also other embodiments of the invention may be utilized by one skilled in the art without departing from the scope of the present invention. The network is in a preferred embodiment a publish/subscribe network using DDS for messaging, but also other topic-based publish/subscribe methods, e.g. D-Bus, may be used according to the invention. Not all but only some of the devices of the home network may include a resource sharing application for sharing resources between devices. The invention resides therefore in the claims herein after appended.

## Claims

1. Publish/subscribe network (N) comprising at least two devices (I1, 12) including each a resource sharing application (A1, A2) with a user interface (UI1, UI2) comprising
a share function (S1, S2) for publishing a resource via a publish/subscribe message to the publish/subscribe network, and
a resource list function (R1, R2) for listing the resource, wherein
a resource sharing application (A1, A2) of one device (I1, 12) subscribes to a resource sharing application (A1, A2) of another device (I1, I2).

2. The publish/subscribe network of claim 1, wherein each resource sharing application (A1, A2) includes a resource provider object (PO1, PO2), and wherein each device (I1, 12) publishes its resource provider object (PO1, PO2) to all devices of the publish/subscribe network (N), when the device is powered up, or upon a user action.

3. The publish/subscribe network of claim 2, wherein the resource provider object of a device (I1, 12) includes identification data of the device, and wherein the resource sharing application (A1, A2) of one device (I1, 12) subscribes to a resource provider object (RO1, RO2) of another device (I1, 12).

4. The publish/subscribe network of claim 3, wherein the identification data of the device include an identification number of the device, a user name of the device and an Internet address of the device.

5. The publish/subscribe network of claim 2, 3 or 4, wherein the resource is identified by a resource object (RO1, RO2) including identification data of the resource object.

6. The publish/subscribe network of claim 5, wherein the identification data of the resource object (RO1, RO2) include an identification number of the resource object, a user name of the resource object and the resource provider object of the device, which shares the resource.

7. The publish/subscribe network of one of the preceding claims, wherein the resource list function (R1, R2) of a first device (I1, 12) lists the resource objects (RO1, RO2) of a second device (I1, 12) being allowed for sharing within the publish/subscribe network on the user interface (UI1, UI2) of the first device.

8. The publish/subscribe network of one of the preceding claims, wherein each device of the publish/subscribe network keeps a list including all the shared resource objects (RO1, RO2) of devices having their resource provider object (PO1, PO2) published.

9. The publish/subscribe network of one of the preceding claims, wherein the resource sharing application (A1, A2) of a first device (I1, 12) subscribes to the resource provider object (PO1, PO2) of a second device (I1, 12) and the resource sharing application (A1, A2) of the second device (I1, 12) subscribes to the resource provider object (PO1, PO2) of the first device (I1, I2).

10. The publish/subscribe network of one of the preceding claims, wherein the resource sharing applications (A1, A2) utilize a Data Distribution Service for Real-Time Systems (DDS) for messaging.

11. The publish/subscribe network of one of the preceding claims, wherein the network (N) is a secured home network and the devices (I1, 12) are Internet-enabled devices comprising an Internet address.

12. The publish/subscribe network of one of the preceding claims, wherein the publish/subscribe network (N) comprises an access gateway and wherein the publish/subscribe message of a first device is transmitted to a second device via the access gateway.

13. Computer readable storage medium including instructions for running a resource sharing application (A1, A2) within a device (I1, 12) of a publish/subscribe network according to claim 1.

14. Device including a microcontroller and a memory having stored instructions for running a resource sharing application (A1, A2) for a publish/subscribe network according to claim 1.

15. Device including a microcontroller and a memory having stored instructions for running a resource sharing application (A1, A2) including a user interface (UI1, UI2), the user interface (UI1, UI2) comprising
a share function (S1, S2) for publishing a resource via a publish/subscribe message to the publish/subscribe network, and
a resource list function (R1, R2) for listing the resource, wherein the resource sharing application (A1, A2) is adapted to subscribe to a resource sharing application (A1, A2) of another device (I1, I2).
